# EUROPEAN PATENT SPECIFICATION

(11) **EP 1 400 143 B1**
(45) Date of publication and mention of the grant of the patent: **20.02.2013**
(21) Application number: 02736428.0
(22) Date of filing: 07.06.2002
(51) Int. Cl.: H04W 24/00

(54) **DYNAMIC HANDLING OF ORPHAN CELLS**
DYNAMISCHE BEHANDLUNG VON WAISENZELLEN
GESTION DYNAMIQUE DE CELLULES ORPHELINES

(30) Priority: 13.06.2001 US 881229
(43) Date of publication of application: 24.03.2004
(73) Proprietor: Telefonaktiebolaget LM Ericsson (publ), 164 83 Stockholm (SE)
(72) Inventor: DUFFY, John-Paul, Athlone (IE); OLSSON, John, S-582 35 Linköping (SE); LUNDSTEDT, Anders, S-583 31 Linköping (SE); JOHANSSON, Daniel, S-602 18 Norrköping (SE); FLORDAL, Henrik, S-641 38 Katrineholm (SE); MC GLYNN, Fergal, Co. Meath (IE); FERRER, Javier, 46005 Valencia (ES)
(74) Representative: Kühn, Friedrich Heinrich
(86) International application number: PCT/SE2002/001129
(87) International publication number: WO 2002/102105

(56) References cited:
- EP-A- 0 893 929
- WO-A-00/38439
- US-A- 5 437 056
- US-A- 5 970 416

## Description

### BACKGROUND OF THE INVENTION

### 1. Field of the Invention

The present invention relates generally to the mobile telecommunications field; and, more particularly, to a method and apparatus for handling base transceiver stations which have become orphaned as a result of the loss of a base station controller.

### 2. Description of Related Art

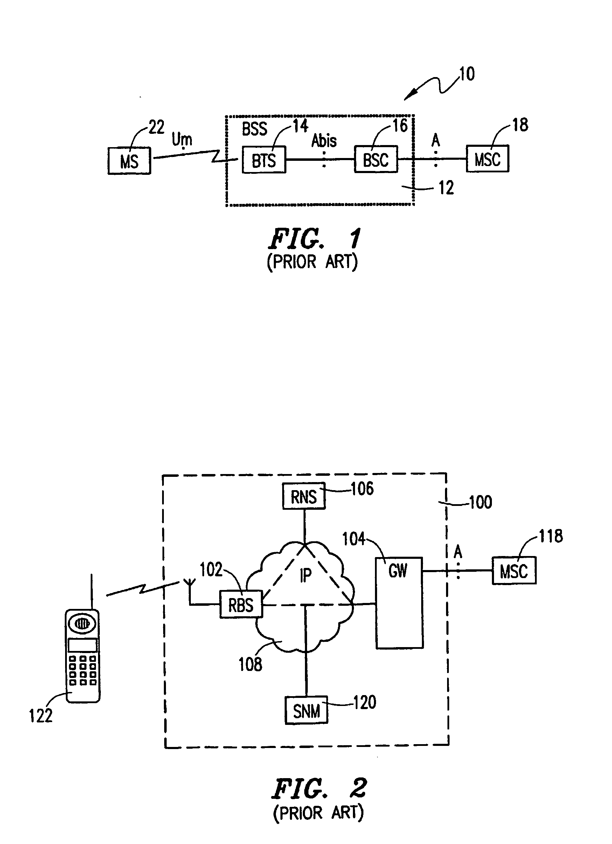

Fig. 1 is a block diagram illustrating a model of a GSM (Global System for Mobile Communications) telephony system. The GSM system model is generally designated by reference number 10 and includes a Radio Access Network (RAN) generally referred to as a Base Station System (BSS) 12. BSS 12 includes two types of logical nodes: a Base Transceiver Station (BTS) 14 and a Base Station Controller (BSC) 16. In order to support circuit-switched speech or data services, the BSC 16 interworks with a Mobile Switching Center (MSC) 18 via an open (non-proprietary) interface known as an A-interface; and, as such, an MSC, such as MSC 18, can serve one or more BSCs.

Each BSC in a GSM network can control a plurality (typically hundreds) of radio cells. In other words, each BSC, such as BSC 16, interworks with a plurality (hundreds) of BTSs via respective Abis interfaces. Each BTS, such as BTS 14, is responsible for the transmission and reception of radio signals over an air interface, Um, in one cell. Consequently, the number of cells in a GSM BSS equals the number of BTSs in that BSS. As such, the BTSs are geographically distributed to provide adequate radio coverage of a BSC area, which forms part of a GSM Public Land Mobile Network (PLMN).

Each BTS, such as BTS 14, provides the capacity to carry a plurality of connections (calls) between Mobile Stations (MSs), such as MS 22, and respective BSCs. Specifically, in GSM, each BTS is equipped with one or more Transceivers (TRXs). Each TRX (not shown) is capable of handling eight timeslots of a Time Division Multiple Access (TDMA) frame. Furthermore, each such timeslot can be assigned different combinations of logical channels, such as, for example, Broadcast Control Channels (BCCHs) and Common Control Channels (CCCHs), Stand-alone Dedicated Control Channels (SDCCHs), and Traffic Channels (TCHs).

Fig. 2 is a block diagram of an Internet Protocol (IP)-based BSS 100, which has been developed by Ericsson. A more detailed description of such an IP-based BSS is disclosed in WO01/58086.

Referring to Fig. 2, the IP-based BSS 100 can include three types of nodes connected to an IP network 108. A first node connected to the IP network 108 is a Radio Base Station (RBS) 102. In general, the RBS 102 implements one or more BTSs; and, in addition, provides IP support for the BSS 100. For example, the RBS 102 functions as an IP host and can include an IP router (not shown). The IP router can be used to route payload User Datagram Protocol (UDP) datagrams to one or more Transceivers (TRXs) and also to connect a plurality of RBSs in various topologies.

A second node connected to the IP network 108 is a Gate Way (G W) 104. The GW 104 can be used to terminate the A-interface. Also, the GW 104 can perform a conversion from one protocol (e.g., an SS7 protocol) to another protocol (e.g., a Transmission Control Protocol (TCP)/IP). The GW 104 can also include a Media GW (MGW) which functions similarly to existing Transcoder Controllers in an Ericsson implementation of the GSM model. The MGW (not shown) includes a pool of Transcoder/Rate Adaptor (TRA) devices (not shown), which, when allocated are connected to the A-interface. However, the IP network (e.g., GSM) side of the TRAs in the MGW are connected to respective UDP ports. Preferably, the GW 104 is connected to the IP network 108 via a separate router (not shown).

A third node connected to the IP network 108 is a Radio Network Server (RNS) 106. The RNS 106 corresponds to the BSC used for implementing a GSM model, such as the GSM model 10 illustrated in Fig. 1. A primary difference between the RNS 106 and a BSC is that the RNS does not switch payloads and does not include a Group Switch (GS). As such, the RNS 106 preferably carries signaling only, and includes a pool of processors (e.g., the number of processors determined by capacity requirements). The RNS 106 provides a robust, general purpose distributed processing environment which can be based on a standard operating system such as, for example, SUN/Solaris^{™}. The RNS 106 can serve one or more logical BSCs and is preferably connected to the IP network 108 via a separate router. As such, the payload can be routed directly between the GW 104 and RBS 102, without passing through the RNS = 106 processors. The A-interface signaling is routed between the RNS 106 and GW 104.

In addition to the three nodes 102, 104 and 106, the BSS 100 also includes a Sub Network Manager (SNM) 120. SNM 120 is an operational and maintenance node that enables the cellular network operator to manage all equipment within the BSS 100.

As described above, in a BSS, such as BSS 12 or BSS 100, each BSC controls a different set of BTSs. For one reason or another, however, it sometimes occurs that a BSC fails to operate properly such that it loses contact with the BTSs that it is supposed to control. Such a failure can be as a result of a catastrophic event such as a fire, an earthquake or the like; or a lesser event such as a power failure or the like. In any event, when a BSC failure does occur; the BTSs that are controlled by the failed BSC are Aorphaned@ and no new phone calls can be made in the cells those BTSs control. This can result in a loss in revenue to the operator and an inconvenience to the subscriber. Furthermore, during the period that the BTSs are orphaned, emergency calls cannot be made in their cells; and this can result in substantial hardship.

A previously known mobile radio telecommunication system in which an exception condition event occurs is disclosed in US 5,970,416. When such an exception event is detected and the not assignable node is determined, all assignable network nodes are determined by a site controller and a reassignment is made to a new an available network node. A call request which was made before the exceptional event can then be processed. This patent does not describe any timing procedure which is specific for the present invention.

### SUMMARY OF THE INVENTION

The present invention provides a method and apparatus for handling a base transceiver station in a mobile telecommunications system that has become orphaned as a result of a loss of a base station controller that normally controls the base transceiver station.

More particularly, the present invention provides a method for handling a base transceiver station in a mobile telecommunications system that includes a plurality of base station controllers and that has become orphaned as a result of a loss of a primary base station controller that normally controls the base transceiver station. The method comprises the steps of determining that contact has been lost between a base transceiver station and the primary base station controller: identifying a secondary base station controller from among the plurality of base station controllers to adopt the base transceiver station; and effecting a handover of the base transceiver station from the primary base station controller to the secondary base station controller. The invention is characterized by a specific timing procedure as is described in the characterizing part of claim 1. A mobile telecommunication system which uses the present invention is described in claim 18.

The present invention recognizes that in an IP-based RAN (BSS), every node included in the RAN is capable of communicating with every other node. The present invention utilizes this capability to solve the problem of orphaned BTSs by effecting a handover of orphaned BTSs from a primary BSC that loses contact with its BTSs to another, secondary BSC that is capable of accepting control of the BTSs..

With the present invention, an operator can maintain some level of service to its customers even if it has lost a BSC by enabling new calls to be handled after only a relatively short downtime period. Furthermore, with the present invention, it becomes possible to handle any emergency calls that might occur within a cell handled by an orphaned BTS as soon as the orphaned BTS has been adopted by the secondary BSC.

Yet further advantages and specific features of the invention will become apparent hereinafter in conjunction with the following detailed description of presently preferred embodiments of the invention.

### BRIEF DESCRIPTION OF THE DRAWINGS

Fig. 1 is a block diagram of an existing GSM system model;
Fig. 2 is a block diagram of an IP-based BSS;
Fig. 3 is a flow chart illustrating a method for handling an orphaned BTS according to a first embodiment of the present invention;
Fig. 4 is a flow chart illustrating a method for handling an orphaned BTS according to a second embodiment of the present invention;
Figs. 5a and 5b are flow charts illustrating a method for handling an orphaned BTS according to a third embodiment of the present invention;
Fig. 6 is a flow chart illustrating a method for handling an orphaned BTS according to a fourth embodiment of the present invention;
Fig. 7 is a flow chart illustrating a method for handling an orphaned BTS according to a fifth embodiment of the present invention; and
Fig. 8 is a flow chart illustrating a method for a primary BSC to readopt an orphaned BTS according to a further embodiment of the present invention.

### DETAILED DESCRIPTION OF PRESENTLY PREFERRED EMBODIMENTS

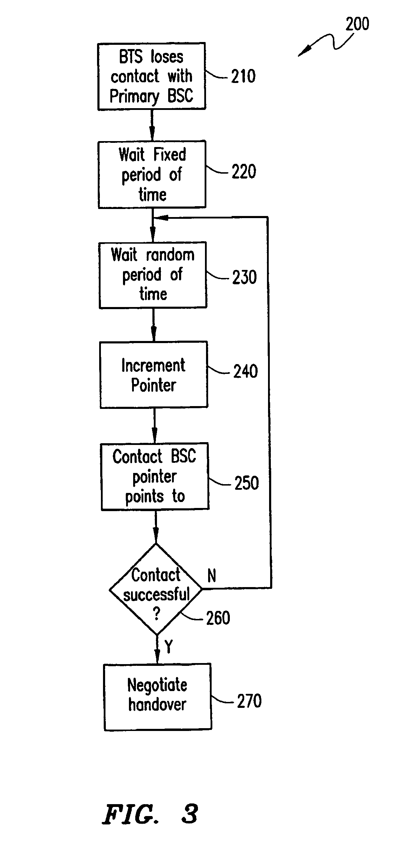

Fig. 3 is a flow chart illustrating a method, generally designated by reference number 200, for handling a BTS which has become orphaned as a result of the loss of its controlling or primary BSC according to a first embodiment of the present invention. In order to perform method 200, each BTS maintains in a memory thereof a list identifying all BSCs in the RAN (BSS) by which it is willing to be controlled, and a pointer into that list. Preferably, the list is prioritized and the first element in the list is the primary BSC, typically the BSC to which the BTS has been assigned by the operator.

The method of Fig. 3 begins when a BTS determines that it has lost contact with its primary BSC (step 210). Following this determination, the BTS waits for a predefined fixed period of time (e.g., about 20 seconds) to make sure that contact with the primary BSC has, in fact, been lost (step 220); and following the fixed period of time, the BTS then waits for a further, random period of time (e.g., from about 0 seconds to about 40 seconds) so as to reduce the likelihood that all BTSs that have lost contact with the same primary BSC contacts the same new BSC at the same time (step 230).

The BTS (which is now an orphaned BTS as a result of its having lost contact with its primary BSC) then endeavors to identify a new, secondary BSC to adopt it. Specifically, the BTS increments the list pointer, i.e., increments the pointer from the first element in the list (which corresponds to the primary BSC and is highest in priority in the list of BSCs by which the BTS is willing to be controlled) to the second element in the list (which corresponds to the BSC in the list that is second highest in priority) (step 240). If the pointer points outside the list, it is reset to point to the second element in the list. The BTS then contacts the BSC that corresponds to the second element in the list and to which the pointer is pointing (step 250).

If the contact is successful, i.e., if the contacted BSC accepts the orphaned BTS, (Y output of step 260), the handover of control of the orphaned BTS from the primary BSC to the new, secondary BSC, i.e., the adopting BSC, is negotiated (step 270). If the contact with the new BSC is unsuccessful, i.e., if the BTS gets no response or a negative response from the contacted BSC (N output of step 260), the process returns to step 230 and the steps 230 to 260 are repeated with the pointer being incremented to the next element in the list in step 240 and the BSC corresponding to that element being contacted in step 250. The process continues until a BSC in the list accepts the BTS (Y output of step 260).

If at any time during the performance of the method 200, the BTS is contacted by the primary BSC, the BTS aborts the method and remains with the primary BSC.

When an orphaned BTS has been adopted by a secondary BSC in accordance with method 200 illustrated in Fig. 3, as well as in accordance with other methods which will be described hereinafter; the secondary BSC can either retrieve cell configuration data from the SNM (Sub Network Manager), or the SNM can push that information into the secondary BSC. The secondary BSC can also retrieve useful information from the adopted BTS itself.

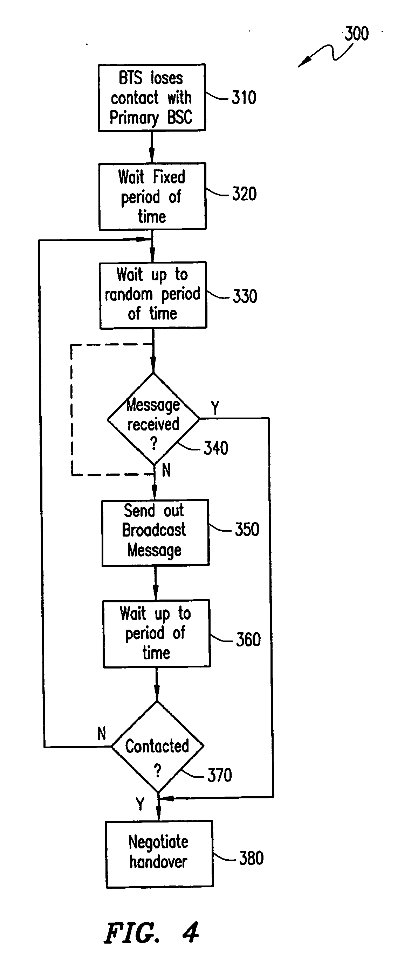

Fig. 4 is a flow chart illustrating a method, generally designated by reference number 300, for handling an orphaned BTS according to a second embodiment of the present invention. In method 300, all BTSs and all BSCs in the RAN subscribe to a special multicast group that is used only for sending out notifications about orphaned BTSs.

As shown in Fig. 4, the method begins when a BTS determines that it has lost contact with its primary BSC (step 310). As in the previous embodiment, the BTS then waits for a predefined fixed period of time (step 320) to ensure that contact with the primary BSC has, in fact, been lost. Thereafter, the BTS then waits for up to a random period of time (step 330), and if the BTS has not received a message from another BTS during the wait (N output of step 340); the BTS sends out a broadcast message to the multicast group advising that contact with its primary BSC has been lost (step 350). The BTS then waits for up to a period of time; for example, for up to a predefined fixed period of time (e.g., about 60 seconds), and for up to a further random period of time (e.g, from about 0 seconds to about 20 seconds) for an answer to the broadcast message it sent out (step 360). If it is not contacted by a BSC (or if it does not receive a message from another BTS) by the end of the period of time, (N output of step 370), it sends a new broadcast message (i.e., the method returns to step 330). If the BTS is contacted by a BSC or if it receives a message from another BTS (Y output of step 370), a handover is negotiated with the contacting BSC (step 380).

In the method of Fig. 4, when a BTS sends a message to the multicast group, the BTS will also receive the sent message since it is a part of the multicast group.

Accordingly, some kind of identification code is included in the sent message, and a filtering mechanism is included in the BTS in order to ensure that the BTS does not receive any messages that it sends out.

When a BSC is notified, via a broadcast message sent out in step 350, that there is an orphaned BTS, the BSC can take several possible actions. Examples of such possible actions include:
1. The BSC can maintain a list of all BTSs in the RAN and the BSCs by which they are controlled. When an orphaned BTS is detected, the adopting BSC is able to identify the BSC that controlled the orphaned BTS, i.e., the primary BSC for that BTS; and, from this information, can identify all of the other BTSs controlled by that BSC without having to wait for each BTS to individually cry out for help. According to this procedure, therefore, if a BTS receives a message from another BTS in step 340 (Y output of step 340), it will not have to send out its own message because it is able to be identified by the adopting, i.e., secondary BSC. The method, accordingly, can proceed directly to the negotiating step 380 as shown in Fig. 4. Similarly, if the BTS receives a message from another BTS in step 370 (Y output of step 370), the method also proceeds directly to the negotiating step 380. A disadvantage of this procedure is that each BSC must always maintain a fully updated list of all BTSs in the RAN.
2. The BSC can also adopt each BTS as it receives a separate broadcast message from each BTS that has been orphaned by the primary BSC. In this procedure, step 340 of the method is unnecessary as there is no reason for a BTS to wait to see if it gets a message from another BTS or from a BSC; and it simply sends out a broadcast message to the multicast group after waiting the random period of time. This is illustrated by the dashed line in Fig. 4 extending directly from step 330 to step 350. In this procedure also, the BTS will only wait in step 360 to be contacted by a BSC (Y output of step 370) as it will not be contacted by another BTS. A drawback of this procedure is that it might take some period of time until all of the orphaned BTSs have been adopted.
3. When a BSC reeives a message broadcast by a BTS in step 350, the BSC can then contact the SNM in order to obtain a list of all the other BTSs that are controlled by the same BSC as the orphaned BTS that sent the message, and that it should also adopt. A drawback of this procedure is that the adopting BSC is unable to do anything until it contacts and receives the list of BTSs from the SNM.

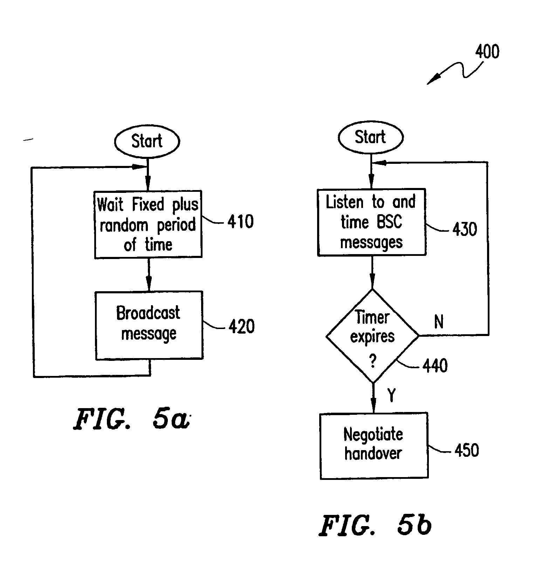

Figs. 5a and 5b are flow charts illustrating a method for handling an orphaned BTS according to a third embodiment of the present invention. In this method, generally designated by reference number 400, each BSC regularly broadcasts a message using multicast to all other BSCs in the RAN advising that it is alive and functioning properly. Such message should contain sufficient information so that it will be easy to map it to the sending BSC. More specifically, as shown in Fig. 5a, the method begins with the step of waiting a predefined fixed period of time plus a random period of time (step 410). This will ensure that the broadcast-messages are spread out over time. The broadcast message is then sent out (step 420); and as shown in Fig. 5a, the broadcast message will continue to be sent out on a regular basis by repeating steps 410 and 420.

In parallel with repeatedly sending out a broadcast message as shown in Fig. 5a, the method illustrated in Fig. 5b is performed. Specifically, the BSC listens to multicasts sent out by other BSCs (step 430), filtering out the messages that the BSC itself has sent so that it won=t receive its own messages. The BSC has a timer running for each BSC that it knows about. Each timer is preferably set to a time greater than the maximum time between multicast messages in order to prevent jitter, and if any timer expires (Y output of step 440), it starts adopting BTSs that were controlled by that BSC (step 450). In other words, if the BSC doesn=t receive a message from another BSC within the time set by its associated timer; it knows that the BSC is no longer operating and begins to adopt its BTSs. The list of BSCs maintained by each BSC is preferably dynamically built from the messages it has received, although it can also be a static list, in which case it is required that the list be maintained current in some manner. The list of all the BTSs that the BSC should adopt can be stored statically in the BSC, or the BSC can contact the SNM to obtain the list.

In the method illustrated in Fig. 5b, rather than a BSC listening to multicasts sent out by all other BSCs in the RAN, as described above, step 430 can comprise listening only to those multicasts sent out by one or more Abuddy@ BSCs. If it loses contact with a buddy BSC, it adopts the BTSs that the buddy BSC controlled. If several BSCs are buddies with one BSC, the several buddy BSCs can share the load necessitated by the adoptions.

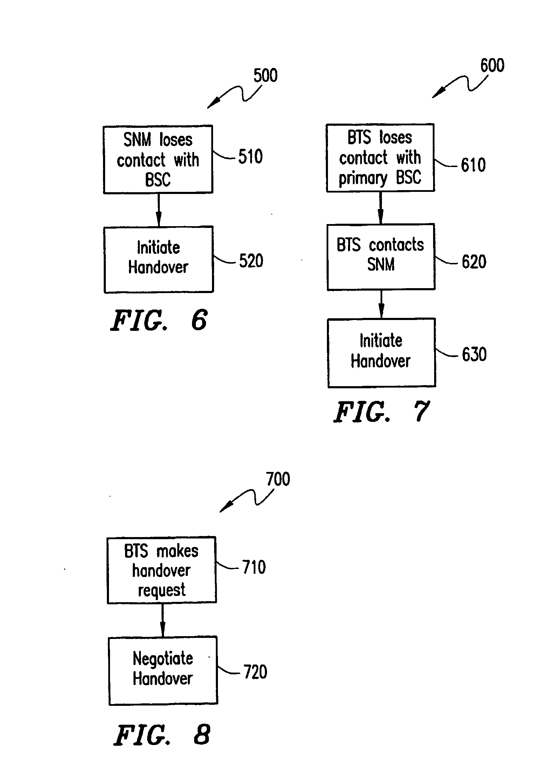

Figs. 6 and 7 are flow charts illustrating methods for handling an orphaned BTS according to yet further embodiments of the present invention. In the method of Fig. 6, generally designated by reference number 500, the SNM monitors all the BSCs in the RAN. When it determines that it has lost contact with a BSC (step 510), it initiates the handover of BTSs controlled by that BSC by contacting other suitable BSCs in the RAN and asking if they can adopt the orphaned BTSs (step 520). In the method of Fig. 7, generally designated by reference number 600, when a BTS determines that it has lost contact with its primary BSC (step 610), it contacts the SNM for advice (step 620). The SNM then initiates the handover of the orphaned BTS, and of other BTSs controlled by the same BSC, to a secondary BSC by either ordering the BTSs to contact a specific BSC or by ordering a specific BSC to contact the BTSs (step 630). Although not illustrated in Figs. 6 and 7, methods 500 and 600 preferably also include steps of waiting a period of time after contact with a BSC is lost to make sure that contact has, in fact, been lost.

After an orphaned BTS has been adopted from a malfunctioning primary BSC by a secondary BSC, when the primary BSC is again alive and functioning properly, a readoption procedure is preferably initiated to enable the primary BSC to readopt its BTS. Fig. 8 illustrates a readoption method according to a further embodiment of the present invention. The readoption method is generally designated by reference number 700; and, in performing the method, it is assumed that a primary BSC has been unavailable for some period of time and that it controlled an orphaned BTS that was adopted by a secondary BSC. The method is initiated by a handover request made by the BTS (step 710); and, thereafter, the handover of the BTS from the secondary BSC back to the primary BSC is negotiated (step 720).

The handover request of step 710 can be accomplished in different ways. In one embodiment, the BTS notifies the primary BSC that it was adopted by the secondary BSC. In this procedure, it is up to the primary BSC to initiate contact with the secondary BSC; and the handover negotiation is carried out by the primary BSC, the secondary BSC and the BTS. In an alternative embodiment, the BTS notifies the secondary BSC that it no longer wants to be adopted by the secondary BSC. In this procedure, all negotiation of the handover of the BTS back to the primary BSC is carried out through the BTS.

With the present invention, as described above, an operator is able to maintain some level of service to its customers, even if it has lost a BSC for some reason. This will preserve income to the operator and minimize inconvenience to the customer. In addition, emergency calls will be able to be handled by an orphaned BTS as soon as it has been adopted by a secondary BSC, ensuring that this important service is maintained.

It should be emphasized that the term comprises/comprising when used in this specification is taken to specify the presence of stated features, integers, steps or components but does not preclude the presence or addition of one or more other features, integers, steps, components or groups thereof.

It should also be recognized that while what has been described herein constitutes presently preferred embodiments of the invention, the invention can be varied in numerous ways without departing from the scope thereof. Accordingly, it should be understood that the invention should be limited only insofar as is required by the scope of the following claims.

## Claims

1. A method in a mobile telecommunications system that includes a plurality of base station controllers for handling a base transceiver station (14) that has become orphaned as a result of a loss of a primary base station controller (16) that normally controls the base transceiver station (14), the method comprising:
determining (210,310,440) that contact has been lost between said base transceiver station (14) and said primary base station controller (16);
identifying (240,350) a secondary base station controller (16) from among said plurality of base station controllers to adopt said base transceiver station (14); and
effecting (270,380,450,520,630,720) a handover of said base transceiver station (14) from said primary base station controller (16) to said secondary base station controller (16),
**characterized in that**
said identifying step includes
sending (350) a broadcast message to said plurality of base station controllers,
waiting (330) a period of time after determining that contact has been lost between said base transceiver station (14) and said primary base station controller (16) before sending said broadcast message wherein said period of time includes a first fixed period of time and up to a second random period of time, and waiting (360) up to a third period of time after sending said broadcast message for a response thereto, and repeating the step of sending a broadcast message if a response is not received within said third period of time, and that
said determining step includes
sending (420) a broadcast message to others of said plurality of base station controllers,
timing (430) the broadcast messages sent from said others of said plurality of base station controllers, wherein said determining step further includes determining that contact has been lost between said base transceiver station (14) and said primary base station controller (16) when a timer associated with said primary base station controller (16) expires without a message having been received from said primary base station controller (16).

2. The method according to Claim 1, wherein said determining step comprises said base transceiver station (14) determining (210) that contact has been lost between said base transceiver station (14) and said primary base station controller (16).

3. The method according to Claim 1, wherein said determining step comprises another base station controller (16) than the primary base station controller (16) determining (310) that contact has been lost between said base transceiver station (14) and said primary base station controller (16).

4. The method according to Claim 1, wherein said determining step comprises a sub network manager (120) determining (440) that contact has been lost between said base transceiver station (14) and said primary base station controller (16).

5. The method according to Claim 1, wherein storing a list for identifying base station controllers by which said base transceiver station (14) is willing to be controlled, and wherein said identifying step (210,310,440) includes said base transceiver station (14) contacting (250,370) base station controllers identified in said list one at a time until said secondary base station controller (16) is identified.

6. The method according to Claim 5, wherein said list is a prioritized list, and wherein said base transceiver station (14) contacts (250,370) base station controllers identified in said list one at a time in order of priority.

7. The method according to Claim 4, wherein said primary base station controller (16) is the base station controller identified in said prioritized list which is of highest priority.

8. The method according to Claim 3, and further including the step of waiting a period of time after determining that contact has been lost between said base transceiver station (14) and said primary base station controller (16) before contacting base station controllers identified in said list.

9. The method according to Claim 8, wherein said step of waiting a period of time comprises waiting a first fixed period of time and thereafter waiting a second random period of time.

10. The method according to Claim 2, wherein said identifying step includes said base transceiver station (14) contacting a sub network manager (120) of said mobile telecommunications system, and wherein said step of effecting a handover includes said sub network manager (120) initiating said handover.

11. The method according to Claim 10, wherein said identifying step comprises said sub network manager (120) contacting one or more of said plurality of base station controllers to identify said secondary base station controller (16).

12. The method according to Claim 10, wherein said identifying step comprises said sub network manager (120) ordering one of said plurality of base station controllers to be said secondary base station controller (16).

13. The method according to Claim 1, wherein said mobile telecommunications system includes a sub network manager (120), and wherein said determining step comprises said sub network manager (120) determining that contact has been lost between said base transceiver station (14) and said primary base station controller (16).

14. The method according to Claim 11, wherein said identifying step comprises said sub network manager (120) contacting one or more of said plurality of base station controllers to identify said secondary base station controller (16).

15. The method according to Claim 1, further including the step of readopting said base transceiver station (14) when contact is able to be reestablished between said base transceiver station (14) and said primary base station controller (16).

16. The method according to Claim 15, wherein said readopting step comprises said base transceiver station (14) requesting readoption of said primary base station controller (16).

17. The method according to Claim 15, wherein said readoption step comprises said base transceiver station (14) advising said secondary base station controller (16) that it wishes to be readopted by said primary base station controller (16).

18. A mobile telecommunications system comprising:
a base station system, said base station system including a plurality of base station controllers, each of which controls at least one base transceiver station (14);
a determiner that determines that contact has been lost between a base transceiver station (14) and a primary base station controller (16) that normally controls said base transceiver station (14);
an identifier that identifies a secondary base station controller (16) of said plurality of base station controllers to adopt said base transceiver station (14); and
handover means for handing over said base transceiver station (14) from said primary base station controller (16) to said secondary base station controller (16),
**characterized in that**
said identifier includes a transmitter in said base transceiver station (14) for transmitting a broadcast message to said plurality of base station controllers, and a receiver in said plurality of base station controllers for receiving a response to said broadcast message, the base transceiver station (14) is configured to wait a period of time after determining that contact has been lost between said base transceiver station (14) and said primary base station controller (16) before sending said broadcast message wherein said period of time includes a first fixed period of time and up to a second random period of time, and to wait up to a third period of time after sending said broadcast message for a response thereto, and to repeat the step of sending a broadcast message if a response is not received within said third period of time, and that
said determiner includes a transmitter in said primary base station controller (16) for transmitting a broadcast message to others of said plurality of base station controllers, wherein said others of said plurality of base station controllers include a receiver for receiving said broadcast message and a timer for determining that said broadcast message has not been received in a period of time, the primary base station controller (16) is configured to time the broadcast messages sent from said others of said plurality of base station controllers, and to determine that contact has been lost between said base transceiver station (14) and said primary base station controller (16) when a timer associated with said primary base station controller (16) expires without a message having been received from said primary base station controller (16).

19. The system according to Claim 18, wherein said determiner is included in said base transceiver station (14) determining that contact has been lost between said base transceiver station (14) and said primary base station controller (16).

20. The system according to Claim 18, wherein said determiner is included in another base station controller (16) than the primary base station controller (16) determining that contact has been lost between said base transceiver station (14) and said primary base station controller (16).

21. The system according to Claim 18, wherein said base station system further includes a sub network manager (120), said determiner is included in the sub network manager (120) determining that contact has been lost between said base transceiver station (14) and said primary base station controller (16).

22. The system according to Claim 18, wherein said base transceiver station (14) includes a memory for storing a list of elements identifying base station controllers (16) among said plurality of base station controllers in said base station system by which it is willing to be controlled, and a pointer which points to an element in said list to identify a potential secondary base station controller (16).

23. The mobile communications system according to claim 18, wherein said plurality of base station controllers comprises all base station controllers in a base station system of said mobile telecommunications system.

24. The mobile communications system according to Claim 18, wherein said others of said plurality of base station controllers comprises predetermined ones of said plurality of base station controllers.

## Patentansprüche

1. Verfahren in einem Mobiltelekommunikationssystem, das eine Vielzahl von Basisstations-Controllern zum Handhaben einer Basis-Transceiverstation (14) einschließt, die durch einen Verlust eines primären Basisstations-Controllers (16) verwaist ist, der normalerweise die Basis-Transceiverstation (14) steuert, wobei das Verfahren umfasst:
Bestimmen (210,310,440), dass der Kontakt zwischen der Basis-Transceiverstation (14) und dem primären Basisstations-Controller (16) verloren gegangen ist;
Identifizieren (240,350) eines sekundären Basisstations-Controllers (16) aus der Vielzahl von Basisstations-Controllern (16), um diese Basis-Transceiverstation (14) zu übernehmen; und
Veranlassen (270,380,450,520,630,720) eines Handovers der Basis-Transceiverstation (14) vom primären Basisstations-Controller (16) an den sekundären Basisstations-Controller (16),
**dadurch gekennzeichnet, dass**
der Identifikationsschritt Folgendes einschließt:
Senden (350) einer Broadcast-Nachricht an die Vielzahl von Basisstations-Controllern,
Warten (330) während einer Zeitperiode nach der Bestimmung, dass Kontakt zwischen der Basis-Transceiverstation (14) und dem primären Basisstations-Controller (16) verloren gegangen ist, bevor die Broadcast-Nachricht gesendet wird, worin die Zeitperiode eine erste feste Zeitperiode und bis zu einer zweiten randomisierten Zeitperiode einschließt, und während bis zu einer dritten Zeitperiode nach dem Senden der Broadcast-Nachricht auf eine Antwort darauf warten (360) und den Schritt des Sendens einer Broadcast-Nachricht wiederholen, falls innerhalb der dritten Zeitperiode keine Antwort empfangen wird, und dass
der Bestimmungsschritt Folgendes einschließt:
Senden (420) einer Broadcast-Nachricht an andere der Vielzahl von Basisstations-Controllern,
Timing (430) der von den anderen der Vielzahl von Basisstations-Controllern gesendeten Broadcast-Nachrichten, worin der Bestimmungsschritt außerdem die Bestimmung einschließt, dass bestimmt wird, dass Kontakt zwischen der Basis-Transceiverstation (14) und dem primären Basisstations-Controller (16) verloren gegangen ist, wenn ein mit dem primären Basisstations-Controller (16) assoziierter Timer abläuft, ohne dass eine Nachricht vom primären Basisstations-Controller (16) empfangen wurde.

2. Verfahren nach Anspruch 1, worin der Bestimmungsschritt umfasst, dass die Basis-Transceiverstation (14) bestimmt (210), dass Kontakt zwischen der Basis-Transceiverstation (14) und dem primären Basisstations-Controller (16) verloren gegangen ist.

3. Verfahren nach Anspruch 1, worin der Bestimmungsschritt umfasst, dass ein anderer, vom primären Basisstations-Controller (16) verschiedener, Basisstations-Controller (16) bestimmt (310), dass Kontakt zwischen der Basis-Transceiverstation (14) und dem primären Basisstations-Controller (16) verloren gegangen ist.

4. Verfahren nach Anspruch 1, worin der Bestimmungsschritt umfasst, dass ein Subnetz-Manager (120) bestimmt (440), dass Kontakt zwischen der Basis-Transceiverstation (14) und dem primären Basisstations-Controller (16) verloren gegangen ist.

5. Verfahren nach Anspruch 1, worin eine Liste zum Identifizieren von Basisstations-Controllern gespeichert wird, von denen die Basis-Transceiverstation (14) gesteuert zu werden gewillt ist, und worin der Identifikationsschritt (210,310,440) einschließt, dass die Basis-Transceiverstation (14) in der Liste identifizierte Basisstations-Controller einen nach dem anderen kontaktiert (250,370), bis der sekundäre Basisstations-Controller (16) identifiziert ist.

6. Verfahren nach Anspruch 5, worin die Liste eine priorisierte Liste ist und worin die Basis-Transceiverstation (14) in der Liste identifizierte Basisstations-Controller einen nach dem anderen in der Prioritätsreihenfolge kontaktiert (250,370).

7. Verfahren nach Anspruch 4, worin der primäre Basisstations-Controller (16) der in der priorisierten Liste identifizierte Basisstations-Controller mit der höchsten Priorität ist.

8. Verfahren nach Anspruch 3, außerdem den Schritt des Wartens während einer Zeitperiode nach der Bestimmung einschließend, dass Kontakt zwischen der Basis-Transceiverstation (14) und dem primären Basisstations-Controller (16) verloren gegangen ist, bevor die in der Liste identifizierten Basisstations-Controller kontaktiert werden.

9. Verfahren nach Anspruch 8, worin der Schritt des Wartens während einer Zeitperiode umfasst, dass während einer ersten festen Zeitperiode gewartet wird und danach während einer zweiten randomisierten Zeitperiode gewartet wird.

10. Verfahren nach Anspruch 2, worin der Schritt des Identifizierens einschließt, dass die Basis-Transceiverstation (14) einen Subnetz-Manager (120) des Mobiltelekommunikationssystems kontaktiert, und worin der Schritt des Veranlassens eines Handovers einschließt, dass der Subnetz-Manager (120) den Handover einleitet.

11. Verfahren nach Anspruch 10, worin der Schritt des Identifizierens umfasst, dass der Subnetz-Manager (120) einen oder mehrere der Vielzahl von Basisstations-Controllern kontaktiert, um den sekundären Basisstations-Controller (16) zu identifizieren.

12. Verfahren nach Anspruch 10, worin der Schritt des Identifizierens umfasst, dass der Subnetz-Manager (120) einem der Vielzahl von Basisstations-Controllern befiehlt, der sekundäre Basisstations-Controller (16) zu sein.

13. Verfahren nach Anspruch 1, worin das Mobiltelekommunikationssystem einen Subnetz-Manager (120) einschließt und worin der Bestimmungsschritt umfasst, dass der Subnetz-Manager (120) bestimmt, dass Kontakt zwischen der Basis-Transceiverstation (14) und dem primären Basisstations-Controller (16) verloren gegangen ist.

14. Verfahren nach Anspruch 11, worin der Schritt des Identifizierens umfasst, dass der Subnetz-Manager (120) einen oder mehrere der Vielzahl von Basisstations-Controllern kontaktiert, um den sekundären Basisstations-Controller (16) zu identifizieren.

15. Verfahren nach Anspruch 1, außerdem den Schritt der erneuten Übernahme der Basis-Transceiverstation (14) einschließend, wenn Kontakt zwischen der Basis-Transceiverstation (14) und dem primären Basisstations-Controller (16) wiederhergestellt werden kann.

16. Verfahren nach Anspruch 15, worin der Schritt der erneuten Übernahme umfasst, dass die Basis-Transceiverstation (14) die erneute Übernahme des primären Basisstations-Controllers (16) anfordert.

17. Verfahren nach Anspruch 15, worin der Schritt der erneuten Übernahme umfasst, dass die Basis-Transceiverstation (14) den sekundären Basisstations-Controller (16) benachrichtigt, dass sie vom primären Basisstations-Controller (16) erneut übernommen werden will.

18. Mobiltelekommunikationssystem, Folgendes umfassend:
ein Basisstationssystem, wobei das Basisstationssystem eine Vielzahl von Basisstations-Controllern umfasst, deren jeder mindestens eine Basis-Transceiverstation (14) steuert;
einen Bestimmer, der bestimmt, dass Kontakt zwischen einer Basis-Transceiverstation (14) und einem primären Basisstations-Controller (16) verloren gegangen ist, der normalerweise die Basis-Transceiverstation (14) steuert;
einen Identifikator, der einen sekundären Basisstations-Controller (16) der Vielzahl von Basisstations-Controllern identifiziert, um die Basis-Transceiverstation (14) zu übernehmen; und
ein Handover-Mittel zum Handover der Basis-Transceiverstation (14) vom primären Basisstations-Controller (16) an den sekundären Basisstations-Controller (16),
**dadurch gekennzeichnet, dass**
der Identifikator einen Sender in der Basis-Transceiverstation (14) zum Übertragen einer Broadcast-Nachricht an die Vielzahl von Basisstations-Controllern einschließt, und einen Empfänger in der Vielzahl von Basisstations-Controllern, um eine Antwort auf die Broadcast-Nachricht zu empfangen, wobei die Basis-Transceiverstation (14) dazu konfiguriert ist, während einer Zeitperiode nach der Bestimmung zu warten, dass Kontakt zwischen der Basis-Transceiverstation (14) und dem primären Basisstations-Controller (16) verloren gegangen ist, bevor die Broadcast-Nachricht gesendet wird, worin die Zeitperiode eine erste feste Zeitperiode und bis zu einer zweiten randomisierten Zeitperiode einschließt, und bis zu einer dritten Zeitperiode nach Senden der Broadcast-Nachricht auf eine Antwort darauf zu warten und den Schritt des Sendens der Broadcast-Nachricht zu wiederholen, falls innerhalb der dritten Zeitperiode keine Antwort empfangen wird, und dass
der Bestimmer im primären Basisstations-Controller (16) einen Sender einschließt, um eine Broadcast-Nachricht an andere der Vielzahl von Basisstations-Controllern zu übertragen, worin die anderen der Vielzahl von Basisstations-Controllern einen Empfänger zum Empfangen der Broadcast-Nachricht einschließen und einen Timer, um zu bestimmen, dass die Broadcast-Nachricht in einer Zeitperiode nicht empfangen wurde, wobei der primäre Basisstations-Controller (16) dazu konfiguriert ist, ein Timing der von den anderen der Vielzahl von Basisstations-Controllern gesendeten Broadcast-Nachrichten auszuführen und zu bestimmen, dass Kontakt zwischen der Basis-Transceiverstation (14) und dem primären Basisstations-Controller (16) verloren gegangen ist, wenn ein mit dem primären Basisstations-Controller (16) assoziierter Timer abläuft, ohne dass eine Nachricht vom primären Basisstations-Controller (16) empfangen wurde.

19. System nach Anspruch 18, worin der Bestimmer in der Basis-Transceiverstation (14) eingeschlossen ist und bestimmt, dass Kontakt zwischen der Basis-Transceiverstation (14) und dem primären Basisstations-Controller (16) verloren gegangen ist.

20. System nach Anspruch 18, worin der Bestimmer in einem vom primären Basisstations-Controller (16) verschiedenen anderen Basisstations-Controller (16) eingeschlossen ist und bestimmt, dass Kontakt zwischen der Basis-Transceiverstation (14) und dem primären Basisstations-Controller (16) verloren gegangen ist.

21. System nach Anspruch 18, worin das Basisstationssystem außerdem einen Subnetz-Manager (120) einschließt, wobei der Bestimmer im Subnetz-Manager (120) eingeschlossen ist und bestimmt, dass Kontakt zwischen der Basis-Transceiverstation (14) und dem primären Basisstations-Controller (16) verloren gegangen ist.

22. System nach Anspruch 18, worin die Basis-Transceiverstation (14) einen Speicher zum Speichern einer Liste von Elementen einschließt, die unter der Vielzahl von Basisstations-Controllern im Basisstationssystem Basisstations-Controller identifizieren, von denen gesteuert zu werden sie gewillt ist, und einen Zeiger, der auf ein Element in der Liste zeigt, um einen potentiellen sekundären Basisstations-Controller (16) zu identifizieren.

23. Mobilkommunikationssystem nach Anspruch 18, worin die Vielzahl von Basisstations-Controllern alle Basisstations-Controller in einem Basisstationssystem des Mobiltelekommunikationssystems umfasst.

24. Mobilkommunikationssystem nach Anspruch 18, worin die anderen der Vielzahl von Basisstations-Controllern vorgegebene der Vielzahl von Basisstations-Controllern umfasst.

## Revendications

1. Procédé dans un système de télécommunications mobiles qui comprend une pluralité de contrôleurs de station de base pour gérer une station émettrice-réceptrice de base (14) qui est devenue orpheline suite à une perte d'un contrôleur de station de base principal (16) qui contrôle normalement la station émettrice-réceptrice de base (14), le procédé comprenant :
la détermination (210, 310, 440) du fait que le contact a été perdu entre ladite station émettrice-réceptrice de base (14) et ledit contrôleur de station de base principal (16) ;
l'identification (240, 350) d'un contrôleur de station de base secondaire (16) parmi ladite pluralité de contrôleurs de station de base pour adopter ladite station émettrice-réceptrice de base (14) ; et
la réalisation (270, 380, 450, 520, 630, 720) d'un transfert de ladite station émettrice-réceptrice de base (14) dudit contrôleur de station de base principal (16) vers ledit contrôleur de station de base secondaire (16),
**caractérisé en ce que**
ladite étape d'identification consiste à
envoyer (350) un message à diffusion générale à ladite pluralité de contrôleurs de station de base,
attendre (330) pendant une certaine période de temps après avoir déterminé que le contact a été perdu entre ladite station émettrice-réceptrice de base (14) et ledit contrôleur de station de base principal (16) avant d'envoyer ledit message à diffusion générale, ladite période de temps comprenant une première période de temps fixe et couvrant jusqu'à une seconde période de temps aléatoire, et attendre (360) jusqu'au bout d'une troisième période de temps après envoi dudit message à diffusion générale une réponse à celui-ci, et répéter l'étape d'envoi d'un message à diffusion générale si une réponse n'est pas reçue au cours de ladite troisième période de temps, et **en ce que**
ladite étape de détermination consiste à
envoyer (420) un message à diffusion générale à d'autres de ladite pluralité de contrôleurs de station de base,
minuter (430) les messages à diffusion générale envoyés par lesdits autres contrôleurs de ladite pluralité de contrôleurs de station de base, ladite étape de détermination consistant en outre à déterminer que le contact a été perdu entre ladite station émettrice-réceptrice de base (14) et ledit contrôleur de station de base principal (16) lorsqu'une minuterie associée audit contrôleur de station de base principal (16) expire sans qu'un message ait été reçu dudit contrôleur de station de base principal (16).

2. Procédé selon la revendication 1, dans lequel ladite étape de détermination comprend la détermination (210) par la station émettrice-réceptrice de base (14) que le contact a été perdu entre ladite station émettrice-réceptrice de base (14) et ledit contrôleur de station de base principal (16).

3. Procédé selon la revendication 1, dans lequel ladite étape de détermination comprend la détermination (310) par un autre contrôleur de station de base (16) que le contrôleur de station de base principal (16) que le contact a été perdu entre ladite station émettrice-réceptrice de base (14) et ledit contrôleur de station de base principal (16).

4. Procédé selon la revendication 1, dans lequel ladite étape de détermination comprend la détermination (440) par un gestionnaire de sous-réseau (120) que le contact a été perdu entre ladite station émettrice-réceptrice de base (14) et ledit contrôleur de station de base principal (16).

5. Procédé selon la revendication 1, dans lequel le stockage d'une liste pour identifier les contrôleurs de station de base par lesquels ladite station émettrice-réceptrice de base (14) souhaite être contrôlée, et dans lequel ladite étape d'identification (210, 310, 440) comprend l'entrée en contact (250, 370) de ladite station émettrice-réceptrice de base (14) avec les contrôleurs de station de base identifiés dans ladite liste l'un après l'autre jusqu'à ce que ledit contrôleur de station de base secondaire (16) soit identifié.

6. Procédé selon la revendication 5, dans lequel ladite liste est une liste classée par ordre de priorité, et dans lequel ladite station émettrice-réceptrice de base (14) entre en contact (250, 370) avec les contrôleurs de station de base identifiés dans ladite liste l'un après l'autre dans l'ordre de priorité.

7. Procédé selon la revendication 4, dans lequel ledit contrôleur de station de base principal (16) est le contrôleur de station de base identifié dans ladite liste classée par ordre de priorité qui est de la plus haute priorité.

8. Procédé selon la revendication 3, comprenant en outre l'étape d'attente pendant une période de temps après détermination que le contact a été perdu entre ladite station émettrice-réceptrice de base (14) et ledit contrôleur de station de base principal (16) avant d'entrer en contact avec les contrôleurs de station de base identifiés dans ladite liste.

9. Procédé selon la revendication 8, dans lequel l'étape d'attente pendant une période de temps comprend l'attente pendant une première période de temps fixe et ensuite l'attente pendant une seconde période de temps aléatoire.

10. Procédé selon la revendication 2, dans lequel ladite étape d'identification comprend l'entrée en contact de ladite station émettrice-réceptrice de base (14) avec un gestionnaire de sous-réseau (120) dudit système de télécommunications mobiles, et dans lequel ladite étape de réalisation d'un transfert comprend le lancement dudit transfert par ledit gestionnaire de sous-réseau (120).

11. Procédé selon la revendication 10, dans lequel ladite étape d'identification comprend l'entrée en contact du gestionnaire de sous-réseau (120) avec un ou plusieurs de ladite pluralité de contrôleurs de station de base pour identifier ledit contrôleur de station de base secondaire (16).

12. Procédé selon la revendication 10, dans lequel ladite étape d'identification comprend l'affectation par le gestionnaire de sous-réseau (120) d'un de ladite pluralité de contrôleurs de station de base en tant que ledit contrôleur de station de base secondaire (16).

13. Procédé selon la revendication 1, dans lequel ledit système de télécommunications mobiles comprend un gestionnaire de sous-réseau (120), et dans lequel ladite étape de détermination comprend la détermination par ledit gestionnaire de sous-réseau (120) que le contact a été perdu entre ladite station émettrice-réceptrice de base (14) et ledit contrôleur de station de base principal (16).

14. Procédé selon la revendication 11, dans lequel ladite étape d'identification comprend l'entrée en contact dudit gestionnaire de sous-réseau (120) avec un ou plusieurs de ladite pluralité de contrôleurs de station de base pour identifier ledit contrôleur de station de base secondaire (16).

15. Procédé selon la revendication 1, comprenant en outre l'étape de réadoption de ladite station émettrice-réceptrice de base (14) lorsque le contact peut être rétabli entre ladite station émettrice-réceptrice de base (14) et ledit contrôleur de station de base principal (16).

16. Procédé selon la revendication 15, dans lequel ladite étape de réadoption comprend la demande de réadoption de ladite station émettrice-réceptrice de base (14) par ledit contrôleur de station de base principal (16).

17. Procédé selon la revendication 15, dans lequel ladite étape de réadoption comprend la notification par ladite station émettrice-réceptrice de base (14) audit contrôleur de station de base secondaire (16) qu'elle souhaite être réadoptée par ledit contrôleur de station de base principal (16).

18. Système de télécommunications mobiles comprenant :
un système de station de base, ledit système de station de base comprenant une pluralité de contrôleurs de station de base, chacun d'entre eux contrôlant au moins une station émettrice-réceptrice de base (14) ;
une unité de détermination qui détermine que le contact a été perdu entre une station émettrice-réceptrice de base (14) et un contrôleur de station de base principal (16) qui contrôle normalement ladite station émettrice-réceptrice de base (14) ;
une unité d'identification qui identifie un contrôleur de station de base secondaire (16) de ladite pluralité de contrôleurs de station de base pour adopter ladite station émettrice-réceptrice de base (14) ; et
des moyens de transfert pour transférer ladite station émettrice-réceptrice de base (14) dudit contrôleur de station de base principal (16) vers ledit contrôleur de station de base secondaire (16),
**caractérisé en ce que**
ladite unité d'identification comprend un émetteur dans ladite station émettrice-réceptrice de base (14) pour émettre un message à diffusion générale vers ladite pluralité de contrôleurs de station de base, et un récepteur dans ladite pluralité de contrôleurs de station de base pour recevoir une réponse audit message à diffusion générale, la station émettrice-réceptrice de base (14) étant configurée pour attendre pendant une période de temps après détermination que le contact a été perdu entre ladite station émettrice-réceptrice de base (14) et ledit contrôleur de station de base principal (16) avant d'envoyer ledit message à diffusion générale, une période de temps comprenant une première période de temps fixe et couvrant jusqu'à une seconde période de temps aléatoire, et pour attendre jusqu'au bout d'une troisième période de temps après envoi dudit message à diffusion générale une réponse à celui-ci, et pour répéter l'étape d'envoi d'un message à diffusion générale si une réponse n'est pas reçue au cours de ladite troisième période de temps, et **en ce que**
ladite unité de détermination comprend un émetteur dans ledit contrôleur de station de base principal (16) pour émettre un message à diffusion générale vers d'autres contrôleurs de ladite pluralité de contrôleurs de station de base, lesdits autres contrôleurs de ladite pluralité de contrôleurs de station de base comprenant un récepteur pour recevoir ledit message à diffusion générale et une minuterie pour déterminer que ledit message à diffusion générale n'a pas été reçu dans une période de temps, le contrôleur de station de base principal (16) étant configuré pour minuter les messages à diffusion générale envoyés par lesdits autres contrôleurs de ladite pluralité de contrôleurs de station de base, et pour déterminer que le contact a été perdu entre ladite station émettrice-réceptrice de base (14) et ledit contrôleur de station de base principal (16) lorsqu'une minuterie associée audit contrôleur de station de base principal (16) expire sans qu'un message ait été reçu dudit contrôleur de station de base principal (16).

19. Système selon la revendication 18, dans lequel ladite unité de détermination est incluse dans ladite station émettrice-réceptrice de base (14), déterminant que le contact a été perdu entre ladite station émettrice-réceptrice de base (14) et ledit contrôleur de station de base principal (16).

20. Système selon la revendication 18, dans lequel ladite unité de détermination est incluse dans un autre contrôleur de station de base (16) que le contrôleur de station de base principal (16), déterminant que le contact a été perdu entre ladite station émettrice-réceptrice de base (14) et ledit contrôleur de station de base principal (16).

21. Système selon la revendication 18, dans lequel ledit système de station de base comprend en outre un gestionnaire de sous-réseau (120), ladite unité de détermination est incluse dans le gestionnaire de sous-réseau (120), déterminant que le contact a été perdu entre ladite station émettrice-réceptrice de base (14) et ledit contrôleur de station de base principal (16).

22. Système selon la revendication 18, dans lequel ladite station émettrice-réceptrice de base (14) comprend une mémoire pour stocker une liste d'éléments identifiant les contrôleurs de station de base (16) parmi ladite pluralité de contrôleurs de station de base dans ledit système de station de base par lesquels elle souhaite être contrôlée, et un pointeur qui pointe vers un élément dans ladite liste pour identifier un contrôleur de station de base secondaire (16) potentiel.

23. Système de télécommunications mobiles selon la revendication 18, dans lequel ladite pluralité de contrôleurs de station de base comprend l'ensemble des contrôleurs de station de base dans un système de station de base dudit système de télécommunications mobiles.

24. Système selon la revendication 18, dans lequel lesdits autres contrôleurs de ladite pluralité de contrôleurs de station de base comprennent des contrôleurs prédéterminés de ladite pluralité de contrôleurs de station de base.
